# EUROPÄISCHE PATENTSCHRIFT

(11) **EP 0 522 452 B1**
(45) Veröffentlichungstag und Bekanntmachung des Hinweises auf die Patenterteilung: **01.02.1995**
(21) Anmeldenummer: 92111255.3
(22) Anmeldetag: 02.07.1992
(51) Int. Cl.: F02D 13/00

(54) **Verfahren zur Laststeuerung an einer Hubkolben-Brenn-Kraftmaschine sowie Brenn-Kraftmaschine**
Method of load control at a reciprocating piston internal combustion engine and internal combustion engine
Procédé pour commander en fonction de la charge un moteur à combustion interne à piston alternatif ainsi que moteur à combustion interne

(30) Priorität: 09.07.1991 DE 4122630
(43) Veröffentlichungstag der Anmeldung: 13.01.1993
(73) Patentinhaber: Bayerische Motoren Werke Aktiengesellschaft, 80788 München (DE)
(72) Erfinder: Oehling, Karl-Heinz, W-8000 München 40 (DE); Rahnavardi, Parviz, W-8000 München 50 (DE)

(56) Entgegenhaltungen:
- DE-A- 3 127 766
- DE-A- 3 146 613
- DE-A- 3 210 914
- DE-A- 3 401 362
- US-A- 4 091 776

## Beschreibung

Die Erfindung betrifft ein Verfahren zur ungedrosselten Laststeuerung an einer Hubkolben-Brennkraftmaschine, wobei ein Lastwert lediglich durch Veränderung der Steuerzeiten der nockenbetätigten Brennraum-Einlaßventile und - Auslaßventile gezielt eingestellt wird, und wobei für die Einlaßventile und Auslaßventile jeweils separate Nockenwellen, nämlich eine Einlaßnockenwelle und eine Auslaßnockenwelle, vorgesehen sind. Ferner betrifft die Erfindung eine vorteilhafte Brennkraftmaschine zur Durchführung des erfindungsgemäßen Laststeuer-Verfahrens.

Aus der DE 34 01 362 A1 ist es bekannt, daß ein definierter Betriebspunkt einer Brennkraftmaschine, gekennzeichnet durch die Drehzahl sowie einen aktuellen Lastwert, durch gezielte Veränderung der Öffnungs- und Schließzeitpunkte der Einlaßventile und Auslaßventile eingestellt werden kann. Gegenüber dem herkömmlichen Laststeuerverfahren an einer quantitätsgesteuerten Brennkraftmaschine, das beispielsweise mittels einer Drosselklappe den bei geöffneten Einlaßventilen in den Brennraum gelangenden Frischluftstrom drosselt, zeichnet sich das aus der oben genannten Schrift bekannte Laststeuerverfahren durch einen erhöhten Brennkraftmaschinen-Wirkungsgrad aus. Beispielsweise können hydraulisch betätigte Einlaßventile und Auslaßventile so angesteuert werden, daß deren Öffnungszeitpunkte und Schließzeitpunkte gemäß dem in der DE 34 01 362 A1 vorgeschlagenen Laststeuerverfahren frei gewählt werden können.

Vollkommen frei ansteuerbare Brennraum-Ventile sind jedoch äußerst aufwendig. Daher hat sich die Erfindung die Aufgabe gestellt, ein im Bauaufwand demgegenüber deutlich reduziertes Laststeuerverfahren aufzuzeigen, wobei weiterhin die Steuerzeiten der Einlaßventile und Auslaßventile verändert werden.
Zur Lösung dieser Aufgabe ist vorgesehen, daß die Nockenwellen jeweils separat gegenüber der Brennkraftmaschinen-Kurbelwelle verdreht werden, wobei die Auslaßnockenwelle lediglich zwei definierte Positionen und die Einlaßnockenwelle auch beliebige, zwischen zwei Endpositionen liegende Zwischenpositionen einnehmen kann.

Die Erfindung hat nicht nur erkannt, daß allein durch Verdrehen der den Einlaßventilen und Auslaßventilen der Brennkraftmaschine zugeordneten Nockenwellen im wesentlichen das gesamte Betriebskennfeld der Brennkraftmaschine abgedeckt und somit jeder Betriebspunkt gezielt eingestellt werden kann, sondern daß es darüber hinaus ausreichend ist, die den Auslaßventilen zugeordnete Nockenwelle lediglich in Zwei alternative Positionen zu bringen. Anstelle aufwendiger Betätigungsvorrichtungen für die einzelnen Einlaßventile und Auslaßventile ist somit wie bei üblichen Brennkraftmaschinen jeweils eine Nockenwelle für die Einlaßventile sowie eine Nockenwelle für die Auslaßventile erforderlich, die jeweils mittels bekannter Verdrehsysteme gegenüber der Brennkraftmaschinen-Kurbelwelle verdreht werden können.

Ein derartiges bekanntes Verdrehsystem ist beispielsweise aus der DE-A-32 10 914 bekannt. Bei diesem System ist es möglich, sowohl die Einlaßnockenwelle als auch die Auslaßnockenwelle gezielt individuell zu verdrehen, jedoch erfolgt bei diesem - ebenso wie bei den weiteren bekannten Systemen - die Verdrehung in Abhängigkeit eines Lastpunktes. Dies bedeutet, daß bei diesen bekannten Systemen mittels eines Drosselorganes (Drosselklappe) zunächst gezielt ein neuer Lastpunkt der Brennkraftmaschine eingestellt wird und erst danach die Nockenwellen im Hinblick auf diesen Lastpunkt verdreht werden. Vollkommen anders arbeitet das erfindungsgemäße Verfahren, da hier ein neuer Lastpunkt durch das beschriebene Verdrehen der Nockenwellen eingestellt wird, ohne daß zeitlich zuvor ein Drosselorgan betätigt wird. Besonders einfach und zuverlässig baut eine Brennkraftmaschine, die zur Ausführung des erfindungsgemäßen Laststeuerverfahrens geeignet ist, insbesondere auch dadurch, daß die Auslaßnockenwelle lediglich in zwei verschiedene Positionen verdreht werden muß. Dies ermöglicht den Einsatz eines äußerst einfachen Verdrehsystemes.

In einer vorteilhaften Ausbildung besitzt eine Brennkraftmaschine neben einem schrittweise einstellbaren Verdrehsystem für die Einlaßnockenwelle und einem lediglich in zwei Endpositionen einstellbaren Verdrehsystem für die Auslaßnockenwelle eine Überwachungseinheit für die Nockenwellen-Verdrehsysteme sowie ein im Ansaugtrakt der Brennkraftmaschine vorgesehenes Drosselorgan, das bei einer Störung in einem Nockenwellen-Verdrehsystem durch die Überwachungseinheit aktiviert wird. Selbst einfachste Nockenwellen-Verdrehsysteme besitzen heute oftmals noch nicht die Zuverlässigkeit technisch ausgereifter Drosselklappen-Laststeuersysteme. Daher schlägt die Erfindung weiter vor, neben den Nockenwellen-Verdrehsystemen in Redundanz im Ansaugtrakt der Brennkraftmaschine eine Drosselklappe vorzusehen. Dieses sicherheitshalber vorgesehene Drosselorgan wird aktiviert, wenn die Überwachungseinheit für die Nockenwellen-Verdrehsysteme eine Störung erkennt.

Ein Ausführungsbeispiel für die Erfindung ist nicht gezeigt, da sowohl beim Verfahren nach Anspruch 1 als auch bei der in Anspruch 2 beschriebenen Brennkraftmaschine auf bekannte Bauteile zurückgegriffen werden kann. Wesentlich ist vielmehr das verblüffend einfache Laststeuerverfahren bzw. die betriebssichere, nach dem erfindungsgemäßen Verfahren arbeitende Brennkraftmaschine.

## Patentansprüche

1. Verfahren zur ungedrosselten Laststeuerung an einer Hubkolben-Brennkraftmaschine, wobei ein Lastwert lediglich durch Veränderung der Steuerzeiten der nockenbetätigten Brennraum-Einlaßventile und -Auslaßventile gezielt eingestellt wird und wobei für die Einlaßventile und Auslaßventile jeweils separate Nockenwellen, nämlich eine Einlaßnockenwelle und eine Auslaßnockenwelle, vorgesehen sind,
dadurch gekennzeichnet, daß die Nockenwellen jeweils separat gegenüber der Brennkraftmaschinen-Kurbelwelle verdreht werden, wobei die Auslaßnockenwelle lediglich zwei definierte Positionen und die Einlaßnockenwelle auch beliebige, zwischen zwei Endpositionen liegende Zwischenpositionen einnehmen kann.

2. Brennkraftmaschine zur Durchführung des Laststeuer-Verfahrens nach Anspruch 1,
gekennzeichnet durch ein schrittweise einstellbares Verdrehsystem für die Einlaßnockenwelle und ein lediglich in zwei Endpositionen einstellbares Verdrehsystem für die Auslaßnockenwelle,
sowie durch eine Überwachungseinheit für die Nockenwellen-Verdrehsysteme und durch ein im Ansaugtrakt der Brennkraftmaschine vorgesehenes, im Normalfall offenes Drosselorgan, das nur bei einer Störung im Nockenwellen-Verdrehsystem durch die Überwachungseinheit aktiviert wird.

## Claims

1. A method of non-throttled control of the load on a reciprocating-piston internal combustion engine, a load value being set in a controlled manner simply by altering the actuation times of the cam-actuated combustion-chamber inlet valves and outlet valves, and separate camshafts, i.e. an inlet camshaft and an outlet camshaft, are provided for the inlet valves and outlet valves, characterised in that the camshafts are each separately rotatable relative to the engine crankshaft, and the outlet camshaft can occupy only two defined positions and the inlet camshaft can also occupy any intermediate positions between two end positions.

2. An internal combustion engine for carrying out the load control method according to claim 1, characterised by a stepwise adjustable rotation system for the inlet camshaft and a rotation system which can be set in only two end positions for the outlet camshaft, by a unit for monitoring the camshaft rotation system, and by a normally-open throttle means which is disposed in the intake part of the engine and which is actuated by the monitoring unit only in the event of a fault in the camshaft rotation system.

## Revendications

1. Procédé de commande non bridé de la charge d'un moteur à combustion interne à piston alternatif, dans lequel on règle une valeur de charge uniquement par modification des temps de commande des soupapes d'admission et d'échappement de la chambre de combustion actionnées par cames et dans lequel on prévoit chaque fois pour les soupapes d'admission et les soupapes d'échappement des arbres à cames distincts, à savoir un arbre à cames d'admission et un arbre à cames d'échappement, caractérisé en ce qu'on fait tourner chaque arbre à cames indépendamment du vilebrequin du moteur à combustion interne, l'arbre à cames d'échappement peut prendre seulement deux positions définies et l'arbre à cames d'admission peut prendre aussi n'importe quelle position intermédiaire entre deux positions extrêmes.

2. Moteur à combustion interne pour réaliser le procédé de commande de charge selon la revendication 1, caractérisé par un dispositif de rotation réglable pas à pas pour l'arbre à cames d'admission et un dispositif de rotation réglable en seulement deux positions extrêmes pour l'arbre à cames d'échappement, ainsi que par une unité de surveillance du dispositif de rotation des cames et par un organe de étranglement prévu dans la tubulure d'admission du moteur à combustion interne, ouvert en fonctionnement normal, qui n'est mis en service par l'unité de surveillance qu'en cas de panne dans le dispositif de rotation des arbres à cames.
